# EUROPEAN PATENT APPLICATION

(11) **EP 4 415 368 A1**
(43) Date of publication of application: **14.08.2024**
(21) Application number: 24154726.4
(22) Date of filing: 30.01.2024
(51) Int. Cl.: H04N 21/254, G06F 21/60, H04L 9/00, H04N 21/8352, H04N 21/84

(54) **INFORMATION PROCESSING APPARATUS, MANAGEMENT APPARATUS, INFORMATION PROCESSING METHOD, CONTROL METHOD FOR MANAGEMENT APPARATUS, AND PROGRAM**

(30) Priority: 09.02.2023 JP 2023018408
(71) Applicant: CANON KABUSHIKI KAISHA, Tokyo 146-8501 (JP)
(72) Inventor: ITO, Hironao, Tokyo, 146-8501 (JP)
(74) Representative: TBK

(57) **Abstract**

An information processing apparatus (130) includes: a first acquiring means (131) for acquiring a published virtual viewpoint image which is a virtual viewpoint image generated based on a plurality of captured images obtained by image capturing performed by a plurality of image capturing apparatuses; a second acquiring means (133) for acquiring publication information representing a state in which the virtual viewpoint image is published; and a generation means (132) for generating content associated with at least the virtual viewpoint image and the publication information.

## Description

### BACKGROUND

### Field

The present disclosure relates to processing based on captured images.

### Description of the Related Art

There is a technology for generating a virtual viewpoint image, which is an image seen from a virtual viewpoint using multiple images obtained by image capturing by multiple image capturing apparatuses.

In the Japanese Patent Laid-Open No. 2015-45920, a description is given of a method in which multiple image capturing apparatuses are installed at different positions and capture images of an object to generate a virtual viewpoint image using the three-dimensional shape of the object estimated from the captured images obtained by the image capturing.

The generated virtual viewpoint image may be published widely by broadcasting using broadcast radio waves or the like. A virtual viewpoint image published in this way may have a higher asset value than other virtual viewpoint images that are not published. However, conventionally, virtual viewpoint images have not been offered in a way where it is identifiable that a virtual viewpoint image has been published.

### SUMMARY

The present invention in its first aspect provides an information processing apparatus as specified in claims 1 to 10.

The present invention in its second aspect provides a management apparatus as specified in claims 11 and 12.

The present invention in its third aspect provides an information processing method as specified in claim 13.

The present invention in its fourth aspect provides a control method of a management apparatus as specified in claim 14.

The present invention in its fifth aspect provides a program as specified in claim 15.

Further features of the present disclosure will become apparent from the following description of exemplary embodiments with reference to the attached drawings.

### BRIEF DESCRIPTION OF THE DRAWINGS

Fig. 1 is a diagram for explaining the configuration of a system;
Fig. 2A and Fig. 2B are diagrams representing an example of the information related to image content generated using an NFT;
Fig. 3 is a diagram illustrating the hardware configuration of an image content generation apparatus;
Fig. 4 is a flowchart for explaining the flow of image content generation processing;
Fig. 5 is a diagram illustrating an example of the market screen displaying image content for sale;
Fig. 6 is a diagram for explaining a system for updating publication information; and
Fig. 7 is a flowchart for explaining publication information updating processing.

### DESCRIPTION OF THE EMBODIMENTS

Hereinafter, an explanation is given of embodiments of the present disclosure with reference to the drawings. However, the technology of the present disclosure is not limited to the following embodiments. Note that, in each of the drawings, identical reference numerals are given to identical members or elements, so that repetitive explanations are omitted or simplified.

### <First Embodiment>

### [Regarding the Functional Configuration of the System]

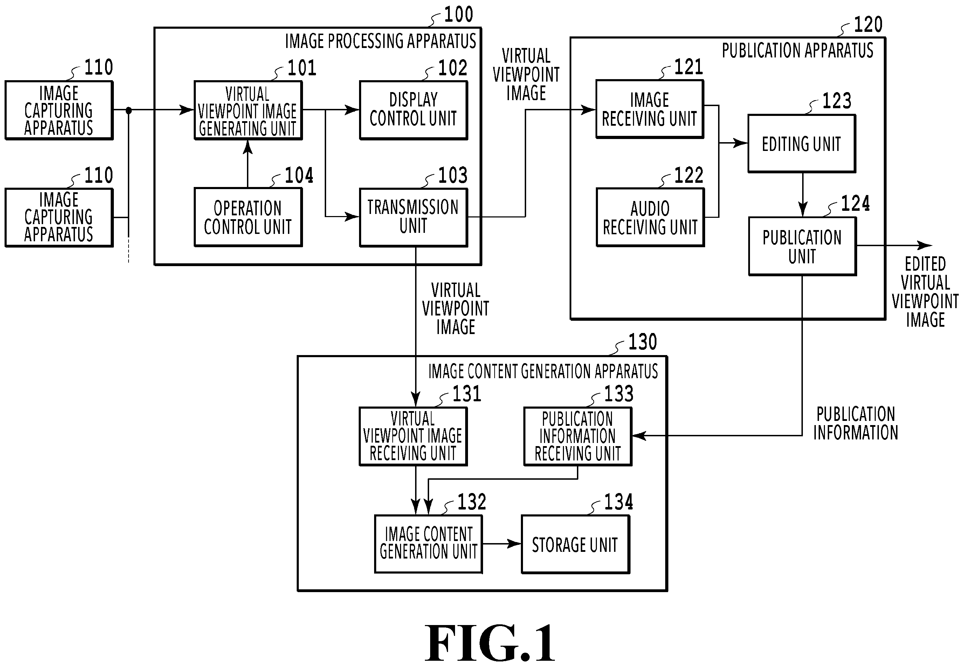

Fig. 1 is a diagram for explaining the configuration of the system of the present embodiment. The system of the present embodiment includes the multiple image capturing apparatuses 110, the image processing apparatus 100, the publication apparatus 120, and the image content generation apparatus 130. The image processing apparatus 100 is an apparatus that generates virtual viewpoint images. The publication apparatus 120 is an apparatus for publishing virtual viewpoint images and the like to the outside via a broadcast network, the Internet, or the like. The image content generation apparatus 130 is an information processing apparatus that generates image content, which is described later.

Each of the multiple image capturing apparatuses 110 is arranged at a different position and in a different direction (orientation) so as to surround the periphery of an image capturing area such as a stage for a concert or the like, a stadium where an event such as a competition is held, or a field. Note that the multiple image capturing apparatuses 110 may not be installed over the entire circumference of the image capturing area and may be installed only at positions in a partial direction of the image capturing area, depending on limitations on the installation locations or the like. The number of image capturing apparatuses that constitute the multiple image capturing apparatuses 110 is not limited. For example, in a case where the image capturing area is a rugby stadium, tens to hundreds of image capturing apparatuses are installed on the periphery of the stadium. Further, the multiple image capturing apparatuses 110 may include an image capturing apparatus with a different angle of view from the other image capturing apparatuses, such as a telephoto camera or a wide-angle camera.

Further, the multiple image capturing apparatuses 110 synchronize temporally and perform image capturing of the image capturing area from different viewpoints. Each image capturing apparatus (camera) constituting the multiple image capturing apparatuses 110 is assigned an identification number (a camera number) for identifying the image capturing apparatus. The camera number may be set based on the installation position of each of the multiple image capturing apparatuses 110, or may be set based on other criterion.

Each of the multiple image capturing apparatuses 110 may include functions other than image capturing, such as a function of extracting a foreground image from a captured image. In that case, hardware (circuits, apparatuses, etc.) for implementing the function may be included.

### [Functional Configuration of the Image Processing Apparatus]

An explanation is herein given of the functional configuration of the image processing apparatus 100. As illustrated in Fig. 1, the image processing apparatus 100 includes the virtual viewpoint image generating unit 101, the display control unit 102, the transmission unit 103, and the operation control unit 104.

The virtual viewpoint image generating unit 101 generates a virtual viewpoint image. The virtual viewpoint image is an image that represents the appearance from a virtual viewpoint that is different from the viewpoints of the actual image capturing apparatuses. The virtual viewpoint image is generated using multiple captured images, which are obtained by image capturing in which the multiple image capturing apparatuses 110 synchronize temporally and capture images of an image capturing area where an object is present from multiple viewpoints, and information about a designated virtual viewpoint. Since virtual viewpoint images allow viewers to view and browse scenes such as sports scenes from various angles, virtual viewpoint images can give viewers a more highly realistic feeling compared to normal captured images. Note that the virtual viewpoint image may be a moving image or a still image. In the following embodiments, an explanation is given on the premise that the virtual viewpoint image is, in principle, a moving image.

In generating a virtual viewpoint image, first, the virtual viewpoint image generating unit 101 acquires multiple captured images, which are obtained by the multiple image capturing apparatuses 110 in image capturing of an image capturing area from different directions. The virtual viewpoint image generating unit 101 acquires a foreground image, which is obtained by extracting a foreground area representing an object to be the foreground such as a person or a ball from each of multiple captured images, and a background image, which is obtained by extracting a background area which is the area excluding the foreground area. The foreground image and the background image have texture information (such as color information).

Then, the virtual viewpoint image generating unit 101 generates three-dimensional shape data (a foreground model) representing the three-dimensional shape of the object to be the foreground, based on the foreground image generated from the multiple captured images. Further, texture data for coloring the foreground model is generated based on the foreground image generated from the multiple captured images. Furthermore, the virtual viewpoint image generating unit 101 generates texture data for coloring the background model, based on the background image. The background model is data representing the three-dimensional shape of a target object to be the background of a virtual viewpoint image, such as a stadium or venue. The background model is generated in advance, for example, by three-dimensionally measuring a stadium, venue, or the like which is to be the background.

The virtual viewpoint image generating unit 101 generates a virtual viewpoint image by mapping respective texture data to a foreground model and a background model and performing rendering according to the virtual viewpoint information.

The virtual viewpoint information is information including at least the position of the virtual viewpoint and the line-of-sight direction from the virtual viewpoint. Specifically, the virtual viewpoint information is a parameter set including a parameter representing the three-dimensional position of the virtual viewpoint and a parameter representing the pan, tilt, and roll directions constituting the line-of-sight direction from the virtual viewpoint. Note that the information included in the virtual viewpoint information is not limited to the parameters described above.

The virtual viewpoint information is generated based on user designations. For example, the position of the virtual viewpoint, the line-of-sight direction from the virtual viewpoint, and the like are designated by the user via an operation unit which is not illustrated in the drawings. The operation unit is configured with a joystick, a jog dial, a touch-sensitive panel, a keyboard, a mouse, etc. The operation control unit 104 receives the content designated by the user via the operation unit. In this way, the position of the virtual viewpoint, the line-of-sight direction from the virtual viewpoint, and the like are designated, and thus the virtual viewpoint information based on the user's designation is generated.

Note that the method for generating a virtual viewpoint image is not limited to the method described above, and other methods such as a method of generating a virtual viewpoint image by projective transformation of a captured image without using a foreground model and a background model may be used. Further, although the virtual viewpoint image is also referred to as a free-viewpoint image, it is not limited to an image corresponding to a virtual viewpoint designated freely (discretionarily) by the user. For example, an image corresponding to a viewpoint selected by the user from multiple candidates is also included in the virtual viewpoint image.

The data of the virtual viewpoint image generated by the virtual viewpoint image generating unit 101 is output to the display control unit 102. The display control unit 102 performs a control to display the virtual viewpoint image on a display unit so that the user can check the generated virtual viewpoint image.

Further, the data of the virtual viewpoint image is output to the transmission unit 103. The transmission unit 103 transmits the acquired virtual viewpoint image data to an external apparatus. In the present embodiment, the transmission unit 103 transmits the data of the virtual viewpoint image generated by the image processing apparatus 100 to the publication apparatus 120 and the image content generation apparatus 130.

A unique value (referred to as a virtual viewpoint image ID) is assigned to the virtual viewpoint image so that the virtual viewpoint image can be identified as a virtual viewpoint image generated by the image processing apparatus 100. For example, the virtual viewpoint image ID is an identifier generated by combining the date and time of generation and a number that is incremented for each ID created.

### [Functional Configuration of the Publication Apparatus]

An explanation is herein given of the functional configuration of the publication apparatus 120. The publication apparatus 120 includes the image receiving unit 121, the audio receiving unit 122, the editing unit 123, and the publication unit 124.

The image receiving unit 121 receives image data such as a virtual viewpoint image from the outside, and outputs the received data to the editing unit 123. For example, the image receiving unit 121 receives the data of a virtual viewpoint image generated by the image processing apparatus 100 from the image processing apparatus 100. In addition, the image receiving unit 121 can receive image data output from an apparatus that outputs images, such as a general television camera. In the following description, an explanation is given assuming that the data of a virtual viewpoint image is received from the image processing apparatus 100.

The audio receiving unit 122 receives audio data from the outside and outputs the received data to the editing unit 123. The audio receiving unit 122 receives audio data obtained by collecting audio with a sound collecting apparatus such as a general microphone installed in the image capturing area where the multiple image capturing apparatuses 110 are installed. For example, the audio receiving unit 122 receives the audio data corresponding to the virtual viewpoint image received by the image receiving unit 121.

The editing unit 123 combines the data of the virtual viewpoint image output from the image receiving unit 121 and the audio data corresponding to the virtual viewpoint image output from the audio receiving unit 122, thereby generating a virtual viewpoint image to which audio is added. Further, the editing unit 123 may add a caption and sound effects to the virtual viewpoint image, or may adjust the color and brightness of the image. The edited virtual viewpoint image is output to the publication unit 124.

The publication unit 124 performs transmission of the virtual viewpoint image edited by the editing unit 123 in order to publish the edited virtual viewpoint image to the outside. The edited virtual viewpoint image transmitted from the publication unit 124 is published in various publication formats. For example, the publication format is broadcasting. Broadcasting includes, for example, broadcasting using broadcast radio waves or wired broadcasting such as cable television. Further, the virtual viewpoint image may be published on the official SNS (social networking service) of the organization related to the competition which is the target of generating the virtual viewpoint image. Alternatively, it may be published in the format of public viewing at a match venue such as a sports stadium. The edited virtual viewpoint image may be published in multiple publication formats.

Further, the publication unit 124 generates publication information representing the state in which the virtual viewpoint image is published. The publication information may be automatically generated or may be generated based on user input. Then, the publication unit 124 transmits the generated publication information to the image content generation apparatus 130. The publication unit 124 also transmits the above-mentioned virtual viewpoint image ID together with the publication information to the image content generation apparatus 130 in order to identify the virtual viewpoint image corresponding to the publication information.

### [Regarding Publication Information]

The publication information is information representing the state in which the virtual viewpoint image is published, and includes, for example, at least one type of information such as the publication format, the publication destination, the publication source, and the publication date.

The publication format is information about the publication format used to publish the virtual viewpoint image. As described above, the virtual viewpoint image may be published in a publication format such as broadcasting via broadcast radio waves, wired broadcasting, an official SNS, public viewing, or the like. For example, in a case where the virtual viewpoint image is published by broadcasting via broadcast radio waves, broadcasting via broadcast radio waves is included in the publication information as the information of the publication format.

The publication destination is information about the region where the virtual viewpoint image was published and the user who is the publishing target. For example, the publication information includes the name of the country where the virtual viewpoint image was published, the name of the region, the name of the facility, the range of users who are the publishing target, etc., as the publication destination information.

The publication source is information such as the organization and account that published the virtual viewpoint image. For example, in a case where the virtual viewpoint image is published by broadcasting, the name of the broadcasting station that published the virtual viewpoint image constitutes the information of the publication source information. In addition, the publication source information is the SNS address in a case of publishing on an official SNS, or the name of the team that did the publishing in a case of publishing by public viewing.

As described above, the edited virtual viewpoint image may be published in multiple publication formats. Therefore, in a case of being published in multiple publication formats, the publication information may include information about multiple publication formats and multiple publication destinations.

In order to publish a virtual viewpoint image, the publication format and the publication destination are selected by the user or the like. For example, in a case where a virtual viewpoint image is to be published to all users via an SNS, the official SNS is selected as the publication format, and all users of the official SNS are selected as the publication destination. In this case, the publication unit 124 acquires the selected publication format and publication destination, and transmits the data of the target virtual viewpoint image so that the virtual viewpoint image will be published according to the acquired publication format and publication destination. In that case, the publication unit 124 automatically acquires the publication date and the address of the SNS used for publishing, which is the publication source information. Then, the publication unit 124 generates the publication information corresponding to the published virtual viewpoint image so that the acquired publication format, publication destination, publication date, and publication source are included. The publication information is generated in this way. The user may input the publication format, the publication destination, the publication date, and the publication source, so that the publication information is generated based on the user's input.

Further, the publication information may include the virtual viewpoint image edited by the editing unit 123, which is the image that was actually published. Furthermore, the publication information may include audio. Furthermore, for example, in a case where a broadcasting station published a virtual viewpoint image by broadcasting, the publication information may include the image used in the actual broadcast, the audio commentary, and the like. According to such information, it is possible to provide information about the actual state of the broadcasting. Therefore, the publication information including such information can make general users more aware that the image is a published virtual viewpoint image.

### [Functional Configuration of the Image Content Generation Apparatus]

An explanation is herein given of the functional configuration of the image content generation apparatus 130. As illustrated in Fig. 1, the image content generation apparatus 130 includes the virtual viewpoint image receiving unit 131, the image content generation unit 132, the publication information receiving unit 133, and the storage unit 134.

The virtual viewpoint image receiving unit 131 receives the data of a virtual viewpoint image from the image processing apparatus 100 and outputs the received data of the virtual viewpoint image to the image content generation unit 132.

The publication information receiving unit 133 receives the publication information received by the virtual viewpoint image receiving unit 131, which represents the state in which the virtual viewpoint image was published. The publication information receiving unit 133 outputs the received publication information to the image content generation unit 132.

The image content generation unit 132 generates image content that includes virtual viewpoint image data, a virtual viewpoint image ID, and publication information, which are associated with each other, based on the acquired virtual viewpoint image and publication information. For example, the image content generation unit 132 uses the virtual viewpoint image ID described above to associate the virtual viewpoint image data with the publication information and generate the image content. Note that it is assumed that the image includes a moving image (video). That is, in a case where the virtual viewpoint image is a moving image, video content is generated as the image content. The storage unit 134 stores the generated image content.

Note that in order to improve the asset value of the image content, the quantity of image content to be distributed may be limited so that the image content is rare. In order to indicate the rarity of the image content, the image content generation unit 132 may assign the generated image content with an upper limit number of distributions and a serial number indicating which number the image content was distributed as within the upper limit number. As a method for managing the image content by assigning a serial number that cannot be altered, for example, a method using a token called an NFT (Non-Fungible Token) may be used. NFTs are established on a blockchain and are used to issue and distribute digital content, such as image content. Examples of NFT formats include token standards called ERC-721 and ERC-1155.

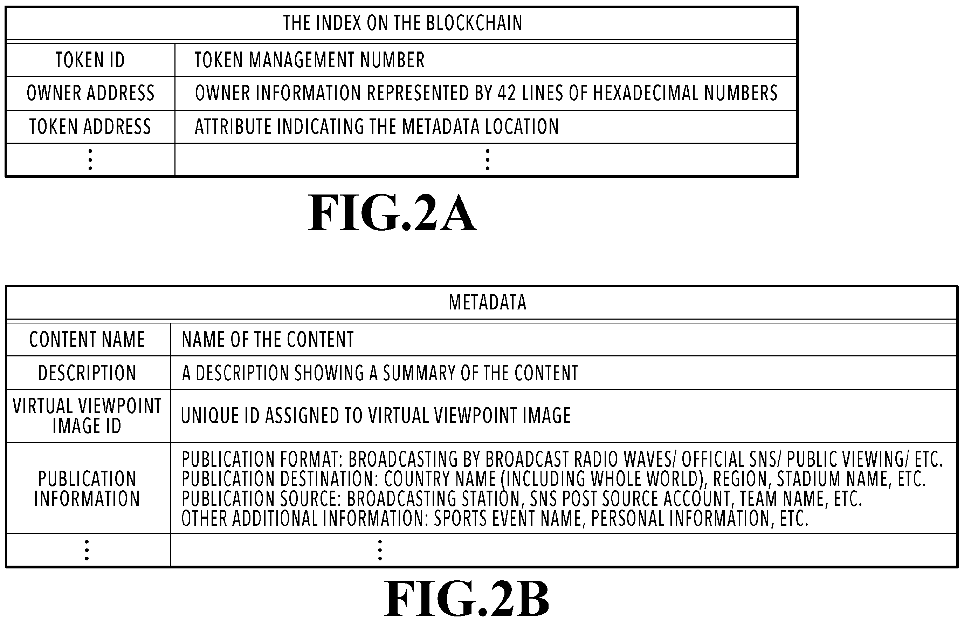

Fig. 2A and Fig. 2B are diagrams representing an example of the information related to image content generated using NFTs. The information related to the image content generated using NFTs includes, for example, the following two types of information. One type of information is an index managed on the blockchain to prevent alteration. Another type of information is metadata that represents image content data managed outside the blockchain.

The index managed on the blockchain includes a token ID, an owner address, and a token address indicating the location of the metadata.

The metadata which is managed outside the blockchain is stored in a location designated by the token address included in the index on the blockchain. As illustrated in Fig. 2A and Fig. 2B, the metadata includes, for example, the name of the image content, a description of the image content, the virtual viewpoint image ID, and the publication information. Further, for example, the serial number indicating rarity is included in the metadata. Furthermore, the metadata includes information about the published virtual viewpoint image corresponding to the virtual viewpoint image ID or the location where the published virtual viewpoint image corresponding to the virtual viewpoint image ID is stored.

In a case where the owner of the image content indicated by the owner address views the virtual viewpoint image included in the image content, for example, the viewer accesses the location where the virtual viewpoint image is stored and displays the virtual viewpoint image. In this way, by including the virtual viewpoint image ID, the virtual viewpoint image corresponding to the virtual viewpoint image ID, and the publication information in the NFT metadata, the image content associated with the publication information and the virtual viewpoint image can be generated. Further, the image and audio that were actually published may be received from the publication apparatus 120, and the received published image and audio may be held as the publication information in the metadata.

Although a method for managing the metadata outside the blockchain is described in Fig. 2A and Fig. 2B, at least part of the information included in the metadata may be managed on the blockchain. For example, the virtual viewpoint image ID, the virtual viewpoint image corresponding to the virtual viewpoint image ID, and the publication information may be included in the index on the blockchain for management.

Further, the image content is not limited to digital content using NFTs. Alternatively, the image content may be a still image file or a moving image file. In this case, the file (the image content) may be generated such that the publication information is held in the header of the image file or the moving image file, for example.

### [Hardware Configuration]

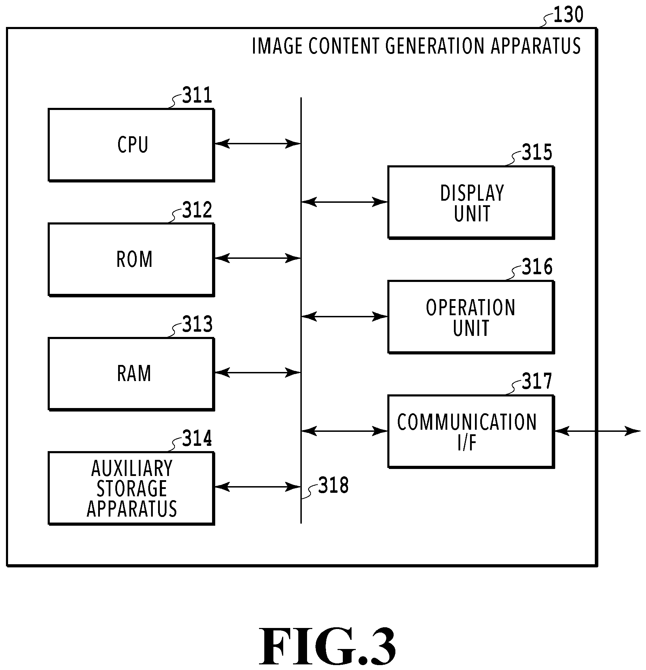

Fig. 3 is a diagram illustrating the hardware configuration of the image content generation apparatus 130 according to the first embodiment. With reference to Fig. 3, an explanation is herein given of the hardware configuration of the image content generation apparatus 130. Since the hardware configurations of the image processing apparatus 100 and the publication apparatus 120 are also the same as the hardware configuration in Fig. 3, explanations thereof are omitted.

The image content generation apparatus 130 includes the CPU 311, the ROM 312, the RAM 313, the auxiliary storage apparatus 314, the display unit 315, the operation unit 316, the communication I/F 317, the bus 318, etc.

The CPU 311 controls the entire image content generation apparatus 130 using a computer program or the like stored in the ROM 312, the RAM 313, the auxiliary storage apparatus 314, or the like.

The RAM 313 temporarily stores a computer program and data supplied from the auxiliary storage apparatus 314 and data or the like supplied from the outside via the communication I/F 317. The auxiliary storage apparatus 314 is configured with, for example, a hard disk drive or the like, and stores various data such as image data, audio data, and image content including a virtual viewpoint image generated by the image content generation unit 132.

The display unit 315 is configured with, for example, a liquid crystal display, an LED, or the like, and displays digital content including a virtual viewpoint image, a GUI (Graphical User Interface), and the like. The operation unit 316 receives operation input by the user and inputs various instructions to the CPU 311. The CPU 311 also operates as a display control unit that controls the display unit 315 and as an operation control unit that controls the operation unit 316.

The communication I/F 317 is used for communication with apparatuses external to the image content generation apparatus 130 (for example, the image processing apparatus 100 and the publication apparatus 120). For example, in a case where the image content generation apparatus 130 is connected to an external apparatus by wire, a cable for communication is connected to the communication I/F 317. In a case where the image content generation apparatus 130 has a function of performing wireless communication with an external apparatus, the communication I/F 317 is equipped with an antenna. The bus 318 connects each unit within the image content generation apparatus 130 and transmits information.

Although each functional unit in each apparatus of the image processing system illustrated in Fig. 1 is implemented by the CPU of each apparatus executing a predetermined program, there is not limitations as such. In addition, for example, hardware such as a GPU (Graphics Processing Unit) for speeding up computation or an FPGA (Field Programmable Gate Array) may be used. Each functional unit may be implemented through cooperation of software and hardware such as a dedicated IC (integrated Circuit), or a part or all of the functions may be implemented by hardware alone.

### [Image Content Generation Processing Flow]

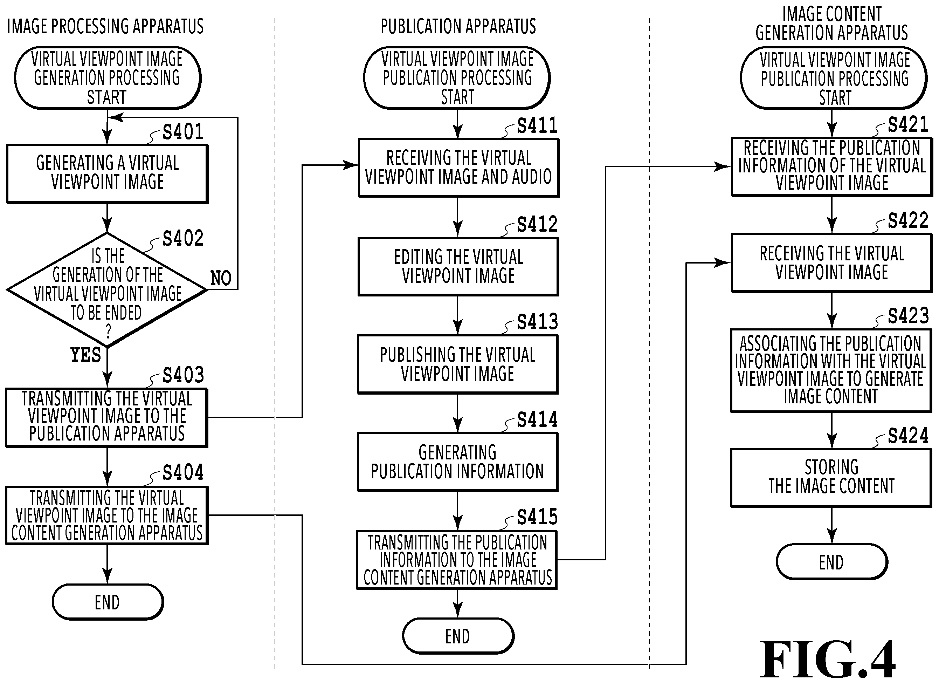

Fig. 4 is a flowchart for explaining the flow of the image content generation processing. The series of processes illustrated in the flowchart of Fig. 4 is performed by the CPU of each apparatus loading a program code stored in the ROM into the RAM and executing it. Furthermore, a part or all of the functions in the steps of Fig. 4 may be implemented by hardware such as an ASIC or an electronic circuit. Note that the symbol "S" in the explanation of each process indicates that it is a step in the flowchart, and the same applies to the following flowcharts.

First, an explanation is given of the flow of the virtual viewpoint image generation processing in the image processing apparatus 100.

In S401, the virtual viewpoint image generating unit 101 generates a virtual viewpoint image corresponding to a processing target frame.

For example, the virtual viewpoint image generating unit 101 acquires information about a virtual viewpoint of the processing target frame generated based on a user's designation. Then, the virtual viewpoint image generating unit 101 uses the acquired information of the virtual viewpoint to generate a virtual viewpoint image viewing the image capturing area from the virtual viewpoint. The generated virtual viewpoint image is displayed on the display unit via the display control unit 102.

In S402, the virtual viewpoint image generating unit 101 determines whether to end the generation of the virtual viewpoint image. For example, in a case where an ending instruction from the user is accepted, the virtual viewpoint image generating unit 101 determines that the generation of the virtual viewpoint image is to be ended. In a case where the virtual viewpoint image generating unit 101 determines in S402 that the generation of the virtual viewpoint image is to be ended (YES in S402), the processing proceeds to S403.

In a case where the virtual viewpoint image generating unit 101 determines that the generation of the virtual viewpoint image is not to be ended (NO in S402), the processing returns to S401. Then, generation of the virtual viewpoint image corresponding to the next frame is executed. In a case where the user performs an operation to designate a virtual viewpoint for multiple frames, a virtual viewpoint image of a moving image composed of multiple frames is generated by repeatedly executing S401.

In S403, the transmission unit 103 transmits the data of the generated virtual viewpoint image to the publication apparatus 120. Further, in S404, the transmission unit 103 transmits the data of the generated virtual viewpoint image to the image content generation apparatus 130. In a case where a virtual viewpoint image of a moving image is generated by repeatedly performing S401, the data of the virtual viewpoint image of the moving image is transmitted. Then, the flow of the virtual viewpoint image generation processing ends.

Next, an explanation is herein given of the flow of the publication processing of the virtual viewpoint image in the publication apparatus 120.

In S411, the image receiving unit 121 receives the data of the virtual viewpoint image transmitted from the image processing apparatus 100 in S403. Further, the audio receiving unit 122 receives the audio data output from the microphone. Each type of data is output to the editing unit 123.

In S412, the editing unit 123 edits the data of the virtual viewpoint image received in S411, and performs processing to combine the data with the audio data received in S411. The editing unit 123 then outputs the edited virtual viewpoint image to the publication unit 124.

In S413, the publication unit 124 performs processing for publishing the virtual viewpoint image edited in S412 in the publication format, with the publication destination, and the like selected by the user or the like. As a result, the edited virtual viewpoint image is published in the publication format, with the publication destination, and the like as selected.

In S414, the publication unit 124 generates publication information representing the state of the publishing done in S413. As mentioned above, the publication information is information including the publication format used to publish the virtual viewpoint image, the publication destination such as the name of a country, the publication source such as a broadcasting station, etc.

In S415, the publication unit 124 transmits the publication information generated in S414 to the image content generation apparatus 130. Actual published image and audio data may also be transmitted to the image content generation apparatus 130. Then, the virtual viewpoint image publication processing flow ends.

Next, an explanation is herein given of the flow of the image content generation processing performed by the image content generation apparatus 130.

In S421, the publication information receiving unit 133 receives the publication information transmitted from the publication apparatus 120 in S415. That is, the publication information receiving unit 133 receives the publication information generated as the virtual viewpoint image generated in S401 was published. The received publication information is output to the image content generation unit 132.

In S422, the virtual viewpoint image receiving unit 131 receives the data of the virtual viewpoint image transmitted from the image processing apparatus 100 in S404. The received virtual viewpoint image data is output to the image content generation unit 132.

In S423, the image content generation unit 132 generates image content associated with the virtual viewpoint image received in S422 and the publication information received in S421.

In S424, the storage unit 134 stores the generated image content. Then, the flow of the image content generation processing ends.

### [Regarding How to Use Publication Information]

An explanation is herein given of an example of a method for selling the generated image content. In the present embodiment, an explanation is given under the assumption that the generated image content is put up for sale in a place established on the Internet called a market that sells NFT content.

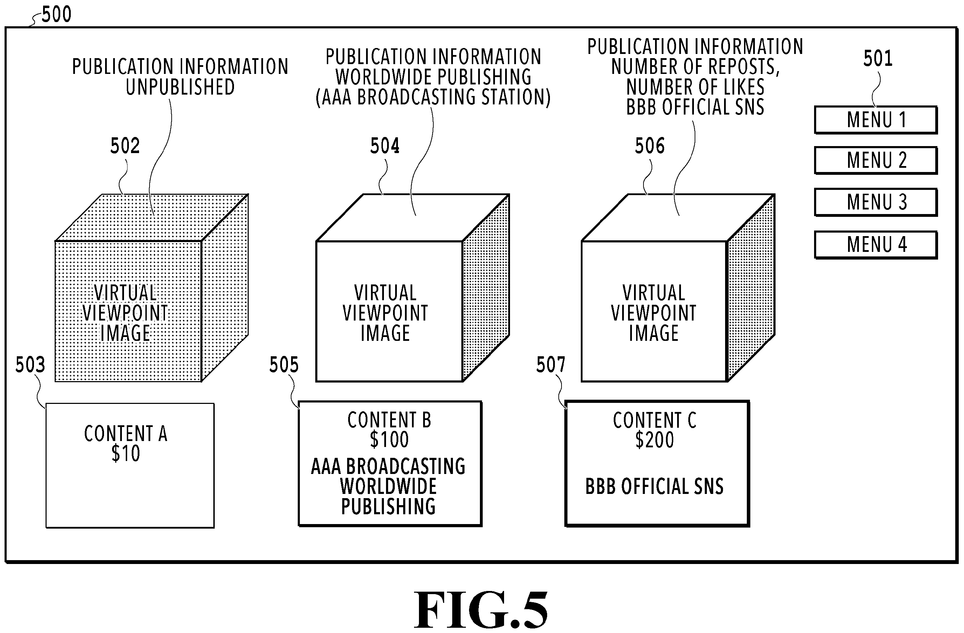

In Fig. 5, an example of the screen for a market where the image content is sold is illustrated. Arranged within the screen 500 are the details menu 501; the cube-shaped objects 502, 504, and 506; and the information 503, 505, and 507 for each object.

The cube-shaped objects 502, 504, and 506 are generated to correspond to the image content to be sold, and represent the content of the corresponding image content to make it easier for market visitors to choose image content to purchase. It is assumed that the objects 502, 504, and 506 in Fig. 5 correspond to any of the image content generated by the image content generation apparatus 130. The objects 502, 504, and 506 display the virtual viewpoint images included in the corresponding image content and the information included in the publication information associated with the virtual viewpoint images. In a case of purchasing the image content, the visitor can purchase the image content that includes the virtual viewpoint image displayed in the object by clicking on the corresponding object 502, 504, or 506 and performing a predetermined operation.

The object 502 displays a virtual viewpoint image and information indicating that the virtual viewpoint image is unpublished. This indicates that the image content corresponding to the object 502 does not include publication information, and that image content including a virtual viewpoint image that has not been published is being sold.

The object 504 displays a virtual viewpoint image and information indicating the virtual viewpoint image has been published to the whole world by AAA broadcasting station, and indicates that the virtual viewpoint image included in the image content corresponding to the object 504 has been published to the whole world. The publication information included in the image content corresponding to the object 504 includes information indicative of having been published to the whole world by AAA broadcasting station. In this way, in the market of the present embodiment, information representing how the image content being sold was published is included in the image content and displayed in the object based on the publication information associated with the virtual viewpoint image.

In the object 506, information indicative of having been published on BBB's official SNS is displayed. Furthermore, the object 506 displays the number of reposts and the number of likes on the SNS where the publishing was done. In this way, by updating the publication information based on information after the virtual viewpoint image was published, it is also possible to display user responses after publication on the market. In addition, in a case where the publication format is public viewing at a match venue, the publication information can be similarly displayed on an object on the market.

In this way, the image content of the present embodiment is established so that market visitors can check a virtual viewpoint image as well as the publication information associated with the virtual viewpoint image. This allows a market visitor to know that the virtual viewpoint image included in the image content being sold has been published, thereby allowing the market visitor to select and purchase image content with high added value.

In Fig. 5, the example in which characters displayed on the market screen indicates that the image content has been published is illustrated. However, as an alternative, for example, it is also possible to show the market visitor that the image content has been published by displaying an object such as a crown or an original icon. Further, in a case where it is determined, based on the publication information, that the image content has increased asset value, an effect such as changing the shape of the cube-shaped objects 502, 504, and 506 may be performed on the market. In this way, in the market, by using an effect that makes the image content stand out according to the publication information, it is possible to show visitors that the image content has high added value.

### [Regarding Updating Publication Information]

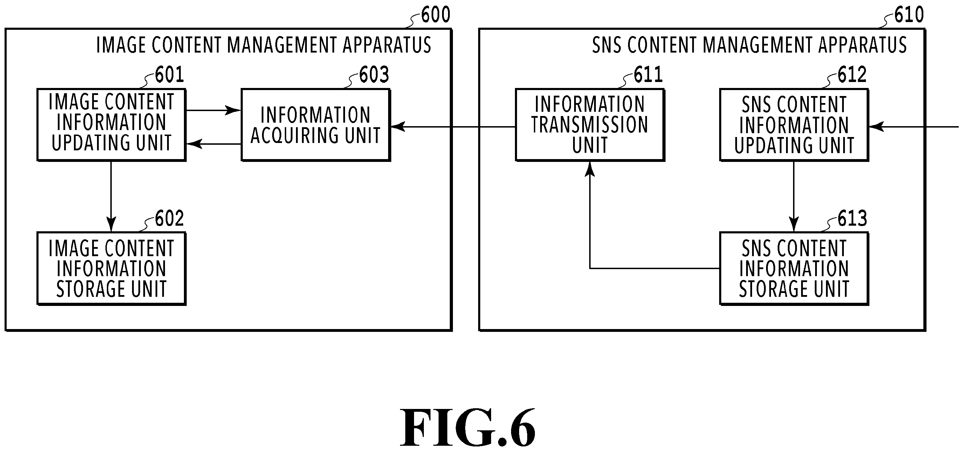

Fig. 6 is a diagram for explaining the system for updating the publication information. The system in Fig. 6 includes the image content management apparatus 600 and the SNS content management apparatus 610. The hardware configurations of the image content management apparatus 600 and the SNS content management apparatus 610 are similar to the hardware configuration of the image content generation apparatus 130 illustrated in Fig. 3.

With reference to Fig. 6, an explanation is herein given of the processing for updating the publication information associated with a virtual viewpoint image based on information after publication in a case where the virtual viewpoint image was published on an SNS. That is, an example of the updating processing of the publication information included in the image content is explained.

The image content management apparatus 600 is an apparatus that manages image content that includes publication information. The SNS content management apparatus 610 is a management apparatus for an SNS. The following explanation is given under the assumption that the virtual viewpoint image included in the image content was published as SNS content on the SNS managed by the SNS content management apparatus 610.

The SNS content management apparatus 610 has functional units including the information transmission unit 611, the SNS content information updating unit 612, and the SNS content information storage unit 613. The SNS content information updating unit 612 acquires action information (such as likes, comments, shares, reposts, etc.) from users regarding the SNS content after publication. Then, the SNS content information updating unit 612 updates the SNS content information about the corresponding SNS content stored in the SNS content information storage unit 613, based on the action information from the users after publication.

The SNS content information includes information regarding the SNS content itself, the date of posting, and the SNS information regarding responses from the users. The SNS information includes the number of likes, the number of comments, the number of shares, and the number of reposts. These items are only examples, and other information may be included.

The information transmission unit 611 acquires the updated SNS information from the information stored in the SNS content information storage unit 613 and transmits the updated SNS information to the image content management apparatus 600. The SNS information to be transmitted is SNS information about a virtual viewpoint image published as SNS content.

The image content management apparatus 600 has functional units including the image content information updating unit 601, the image content information storage unit 602, and the information acquiring unit 603.

The image content information storage unit 602 stores at least the publication information associated with a virtual viewpoint image. In a case where the image content is generated using an NFT, the image content information storage unit 602 is the storage location for metadata designated by the token address included in the index on the blockchain. In this case, the image content information storage unit 602 stores at least the metadata information illustrated in Fig. 2A and Fig. 2B within the information included in the image content. The image content information storage unit 602 may store the virtual viewpoint image associated with the stored publication information.

The information acquiring unit 603 acquires the updated SNS information transmitted from the information transmission unit 611 of the SNS content management apparatus 610. Further, the information acquiring unit 603 outputs the acquired SNS information to the image content information updating unit 601.

The image content information updating unit 601 acquires the updated SNS information from the information acquiring unit 603, and updates the publication information stored in the image content information storage unit 602 so that the acquired SNS information is reflected. For example, the number of likes, the number of comments, the number of shares, the number of reposts, etc., included in the publication information associated with the virtual viewpoint image corresponding to the acquired SNS information is updated based on the acquired SNS information.

Although each functional unit of each apparatus in Fig. 6 is implemented by the CPU of each apparatus executing a predetermined program, there is not a limitation as such. In addition, for example, hardware such as a GPU (Graphics Processing Unit) for speeding up computation or an FPGA (Field Programmable Gate Array) may be used. Each functional unit may be implemented through cooperation of software and hardware such as a dedicated IC (integrated Circuit), or a part or all of the functions may be implemented by hardware alone.

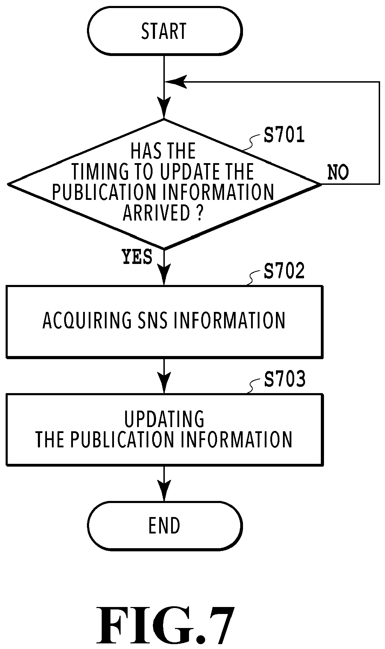

Fig. 7 is a flowchart for explaining the processing for updating the publication information one time in the image content management apparatus 600.

The image content information updating unit 601 monitors whether it is the timing to update the publication information, and in S701, the image content information updating unit 601 determines whether the timing to update the publication information has arrived. The image content information updating unit 601 repeats the process of S701 until it is determined that the information update timing has arrived.

In a case where the elapsed time since the last update of the publication information is equal to or longer than a predetermined time period, the image content information updating unit 601 determines that the update timing has arrived. The predetermined time period is, for example, 10 seconds. Further, the predetermined time period for determining the update timing may be changeable, and in that case, an appropriate time period is set for each use case.

In a case where the image content information updating unit 601 determines that the update timing has arrived, the processing proceeds to S702. In S702, the image content information updating unit 601 requests the information acquiring unit 603 to acquire the SNS information for updating the publication information managed by the image content management apparatus 600. The information acquiring unit 603 receives the request from the image content information updating unit 601 and acquires the SNS information from the SNS content management apparatus 610. For example, the latest SNS information is acquired. Then, the information acquiring unit 603 outputs the acquired SNS information to the image content information updating unit 601.

In S703, the image content information updating unit 601 updates the target publication information stored in the image content information storage unit 602, based on the acquired SNS information. For example, the number of likes, the number of comments, the number of shares, and the number of reposts on the SNS included in the publication information are updated. By repeatedly executing the updating processing illustrated in Fig. 7, the publication information stored in the image content information storage unit 602 is updated continuously.

As described above, the market is established so that market visitors can check the publication information associated with the virtual viewpoint images included in the image content being sold. By updating the publication information, the publication information displayed on the market in Fig. 5 is also updated.

Note that the publication information is updated in the same way in a case where the virtual viewpoint image was published in a publication format other than via an SNS. For example, in a case where the virtual viewpoint image was published by broadcasting, a user inputs information such as the audience rating, and the information acquiring unit 603 of the image content management apparatus 600 acquires the contents input by the user. Then, the image content information updating unit 601 updates the publication information based on the contents input by the user. In this way, the publication information associated with the virtual viewpoint image published by broadcasting can also be updated to reflect the information after publication.

As explained above, in the present embodiment, image content can be generated associating publication information with a virtual viewpoint image. Therefore, according to the present embodiment, it is possible to generate digital content so as to have a high asset value.

According to the present disclosure, content including a virtual viewpoint image that can be identified as being published can be generated.

### <Other Embodiments>

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

An information processing apparatus (130) includes: a first acquiring means (131) for acquiring a published virtual viewpoint image which is a virtual viewpoint image generated based on a plurality of captured images obtained by image capturing performed by a plurality of image capturing apparatuses; a second acquiring means (133) for acquiring publication information representing a state in which the virtual viewpoint image is published; and a generation means (132) for generating content associated with at least the virtual viewpoint image and the publication information.

## Claims

1. An information processing apparatus (130) comprising:
a first acquiring means (131) for acquiring a published virtual viewpoint image which is a virtual viewpoint image generated based on a plurality of captured images obtained by image capturing performed by a plurality of image capturing apparatuses;
a second acquiring means (133) for acquiring publication information representing a state in which the virtual viewpoint image is published; and
a generation means (132) for generating content associated with at least the virtual viewpoint image and the publication information.

2. The information processing apparatus according to claim 1,
wherein the content is digital content generated using an NFT (Non-Fungible Token).

3. The information processing apparatus according to claim 2,
wherein the publication information is managed outside a blockchain, and
wherein information about a location where the publication information is managed is included in an index on a blockchain.

4. The information processing apparatus according to claim 3,
wherein the virtual viewpoint image and the publication information are associated with each other by including information for accessing the virtual viewpoint image and the publication information in metadata.

5. The information processing apparatus according to claim 1,
wherein the content is assigned a serial number indicating a quantity of the content for distribution.

6. The information processing apparatus according to claim 1,
wherein the content is a file of a still image or a moving image, and
wherein the publication information is included in a header of the file.

7. The information processing apparatus according to any one of claims 1 to 6,
wherein the publication information includes at least one of a publication format used for publication of the virtual viewpoint image, a publication destination of the virtual viewpoint image, a publication source from which the virtual viewpoint image is published, and a publication date on which the virtual viewpoint image is published.

8. The information processing apparatus according to claim 7,
wherein the publication format represents at least one of broadcasting via broadcast radio waves, a social networking service, and public viewing.

9. The information processing apparatus according to claim 7 or 8,
wherein the publication destination represents at least one of the whole world, a name of a country, a name of a region, and a range of users who are publishing targets.

10. The information processing apparatus according to any one of claims 1 to 9,
wherein the content is established so that the virtual viewpoint image and the publication information are displayed together.

11. A management apparatus (600) comprising:
a management means (602) for managing publication information representing a state in which a virtual viewpoint image is published, the publication information being associated with the virtual viewpoint image;
an acquiring means (603) for acquiring information about the virtual viewpoint image after publication; and
an updating means (601) for updating the publication information managed by the management means, based on the information acquired by the acquiring means.

12. The management apparatus according to claim 11,
wherein the virtual viewpoint image is a virtual viewpoint image published via a social networking service, and
wherein, the acquiring means acquires, as the information, information relating to a user response after publication of the virtual viewpoint image from an apparatus managing the social networking service.

13. An information processing method comprising:
acquiring a published virtual viewpoint image which is a virtual viewpoint image generated based on a plurality of captured images obtained by image capturing performed by a plurality of image capturing apparatuses;
acquiring publication information representing a state in which the virtual viewpoint image is published; and
generating content associated with at least the virtual viewpoint image and the publication information.

14. A control method of a management apparatus, the control method comprising:
managing publication information representing a state in which a virtual viewpoint image is published, the publication information being associated with the virtual viewpoint image;
acquiring information about the virtual viewpoint image after publication; and
updating the managed publication information, based on the acquired information.

15. A program for causing a computer to execute each means of the information processing apparatus according to any one of the claims 1 to 10.
